# EUROPÄISCHE PATENTANMELDUNG

(11) **EP 2 599 572 A1**
(43) Veröffentlichungstag der Anmeldung: **05.06.2013**
(21) Anmeldenummer: 11191687.0
(22) Anmeldetag: 02.12.2011
(51) Int. Cl.: B23D 21/00

(54) **Spanloses Trennen von dünnwandigen Rohren**

(71) Anmelder: Boa AG, 6023 Rothenburg (CH)
(72) Erfinder: Muther, Adrian, 6023 Rothenburg (CH)
(74) Vertreter: Lermer, Christoph

(57) **Zusammenfassung**

Eine Vorrichtung 1 zum Durchtrennen von Rohren 2, z.B. von Blechrohren, umfasst ein Messersystem 3 mit einem ersten Anreißmesser 31, einem zweiten Anreißmesser 32 und einem Abschlagmesser 30. Außerdem ist eine Halteeinrichtung 4 zum Halten des Rohres 2 während des Schneidvorgangs vorgesehen. Kontaktflächen 410 bzw. 420 der Halteeinrichtung 4 sind konkav und bilden einen Aufnahmeraum für das Rohr 2, das verspannt wird und dabei eine ovale Außenkontur annimmt.

## Beschreibung

### GEBIET DER ERFINDUNG

Die vorliegende Erfindung betrifft eine Vorrichtung und ein Verfahren zum Durchtrennen eines rohrförmigen Werkstücks. Die Vorrichtung umfasst eine Schneideinrichtung; und eine Halteeinrichtung zum Halten wenigstens eines Abschnitts des Werkstücks während des Trennvorgangs, wobei die Halteeinrichtung wenigstens eine erste vordere Haltebacke und eine zweite vordere Haltebacke aufweist, und die erste vordere Haltebacke und/oder die zweite vordere Haltebacke eine erste konkave Kontaktfläche bzw. eine zweite konkave Kontaktfläche zum Halten des Werkstücks aufweisen. Das Verfahren umfasst die Schritte: a) Einführen eines Rohrabschnitts zwischen Kontaktflächen einer Halteeinrichtung; und b) Bewegen der Kontaktflächen relativ zueinander quer zum Rohrabschnitt, sodass der Rohrabschnitt mit den Kontaktflächen in Kontakt tritt.

### STAND DER TECHNIK

Im Herstellungsprozess beispielsweise eines Metallbalges müssen unter anderem Rohre mit einer Längsnaht geschweißt werden. Die Schweißung dieser Längsnaht geschieht im Endlos-Verfahren. Zur Weiterverarbeitung muss das Rohr am Ende der Anlage geschnitten werden. Dazu wurde der Einsatz unterschiedlicher Vorrichtungen und Verfahren vorgeschlagen. So kann ein Rohr in eine Haltevorrichtung bewegt und dort fixiert werden. Anschließend wird die Trennkante eines Trennmessers auf die Rohraußenwand zu bewegt, dringt in die Rohrwand ein und durchtrennt diese anschließend in einer Trennebene vollständig.

Problematisch bei herkömmlichen Vorrichtungen und Verfahren zum Durchtrennen von Metallrohren ist jedoch, dass das Rohr bedingt durch die dünne Wandstärke von wenigen Zehntel Millimetern durch den Schnittvorgang meist stark zusammengequetscht wird. Der Schnitt wird, sofern die Rohrwand nicht genügend stabilisiert wird, relativ unsauber.

Außerdem tritt beispielsweise beim Trennen eines Rohres mittels einer Trennscheibe das Problem auf, dass feiner Staub entsteht, der nicht einfach entfernt werden kann. Dadurch wird der Bereich des Schnitts verunreinigt, was anschließende Reinigungsmaßnahmen und Nacharbeiten nach sich ziehen kann.

### AUFGABE DER ERFINDUNG

Ausgehend davon besteht die Aufgabe der vorliegenden Erfindung darin, eine Vorrichtung und ein Verfahren zum Durchtrennen von dünnwandigen, rohrförmigen Werkstücks bereitzustellen, die ein sauberes und präzises Durchtrennen ermöglichen.

### TECHNISCHE LÖSUNG

Diese Aufgabe wird gelöst durch eine Vorrichtung nach Anspruch 1 und ein Verfahren nach Anspruch 12. Vorteilhafte Ausführungen ergeben sich aus den Merkmalen der abhängigen Ansprüche.

Eine erfindungsgemäße Vorrichtung zum Durchtrennen eines rohrförmigen Werkstücks umfasst: eine Schneideinrichtung; und eine Halteeinrichtung zum Halten wenigstens eines Abschnitts des Werkstücks während des Trennvorgangs, wobei die Halteeinrichtung wenigstens eine erste vordere Haltebacke und eine zweite vordere Haltebacke aufweist, und die erste vordere Haltebacke und/oder die zweite vordere Haltebacke eine erste konkave Kontaktfläche bzw. eine zweite konkave Kontaktfläche zum Halten des Werkstücks aufweisen, und wobei die erste konkave Kontaktfläche und/oder die zweite konkave Kontaktfläche derart ausgebildet sind, dass das Rohr während des Trennvorgangs zwischen der ersten vorderen Haltebacke und der zweiten vorderen Haltebacke verspannt ist, insbesondere so, dass das Rohr eine erhöhte Steifigkeit erhält.

Vorzugsweise sind die erste konkave Kontaktfläche und/oder die zweite konkave Kontaktfläche derart ausgebildet, dass das Werkstück während des Trennvorgangs im Bereich der Kontaktbacken deformiert wird. Es wird insbesondere so deformiert, dass es von zwei Seiten her zusammengedrückt wird und sich somit in einer Richtung quer oder senkrecht zu den beiden Seiten zwischen den Haltebacken ausdehnt. Wenigstens eines der ausgedehnten Enden entspricht vorzugsweise dem Eintrittspunkt eines Messers. Anders ausgedrückt wird das Werkstück weitestgehend formschlüssig durch die Haltebacken eingeschlossen, wobei es gleichzeitig elastisch verformt wird.

Auf diese Weise wird eine Durchtrennung von Werkstücken beliebiger Querschnitte wie rund, oval, elliptisch, quadratisch, rechteckig, dreieckig, etc. durchgeführt werden, wobei stets das Werkstück während des Trennvorgangs verspannt wird und seinen Querschnitt, ausgehend von seinem Querschnitt ohne Krafteinwirkung, signifikant verändert, z. B. hin von einem runden (kreisförmigen) Querschnitt zu einem ovalen (elliptischen) Querschnitt, oder von einem rechteckigen Querschnitt zu einem Querschnitt einer Tonne, etc.. Dem entsprechend soll unter einem rohrförmigen Werkstück, wenn dieses auch in den meisten Ausführungsformen einen runden Querschnitt hat, jedes innen hohle Werkstück mit beliebigem Querschnitt verstanden werden. Die konkaven Innenkonturen/Kontaktflächen der Backen bilden im zusammengefahrenen Zustand eine Aufnahmeöffnung zur Aufnahme des Werkstücks. Die durch die Halteeinrichtung gebildete Aufnahmeöffnung für das Werkstück weicht vom Außendurchmesser des nicht verspannten Werkstücks ab.

Insbesondere sind die erste konkave Kontaktfläche und/oder die zweite konkave Kontaktfläche derart ausgebildet bzw. geformt, dass das Werkstück während des Trennvorgangs im Bereich der Kontaktbacken einen ovalen und/oder elliptischen Querschnitt annimmt.

Es ist besonders bevorzugt, wenn die Kontaktflächen der Haltebacken einen Innenraum begrenzen, der wenigstens abschnittsweise einen ovalen und/oder elliptischen Querschnitt aufweist. Der Innenraum ist weitgehend geschlossen, sodass das verspannte Rohr nicht ausweichen kann. Lediglich kleinere Abschnitte des Innenraums können offen bleiben, z. B. im Bereich der größten Krümmung, an der in der Regel auch die Schweißnaht des Rohres angeordnet wird.

Die Halteeinrichtung kann außerdem eine erste hintere Haltebacke und eine zweite hintere Haltebacke aufweisen, wobei die erste vordere Haltebacke und die zweite vordere Haltebacke auf einer ersten Seite der Trennebene angeordnet sind, und die erste hintere Haltebacke und die zweite hintere Haltebacke an einer der ersten Seite gegenüberliegenden zweiten Seite der Trennebene angeordnet sind. D. h. das Rohr wird, in einer Längsrichtung des Rohres betrachtet, vor und hinter der Trennebene fest gehalten. Der Aufbau der ersten und zweiten vorderen sowie hinteren Haltebacken kann sich entsprechen. So können beispielsweise alle Kontaktflächen konkav so ausgebildet sein, dass sowohl die erste und zweite vordere als auch die erste und zweite hintere Kontaktfläche jeweils, wenigstens abschnittsweise, einen im Querschnitt konkaven oder elliptischen Innenraum ausbilden. Das Rohr wird somit im Bereich der Haltebacken und somit im Bereich der Schneidebene / Trennebene oval bzw. elliptisch verformt. Eine stärker gekrümmte, vorzugsweise eine der am stärksten gekrümmten Seiten des Innenraums bzw. des verformten Rohres weisen (vor dem Schneidvorgang) in Richtung der an das Rohr angreifenden Schneidkanten, d.h. die Schneidmesser (insbesondere das Abschlagmesser) dringen anfänglich in eine stark oder die am meisten gekrümmte Oberfläche der Außenseite der verformten Rohrwand ein. Der größte Durchmesser des ovalen bzw. elliptischen Querschnitts kann mit der Bewegungsrichtung des Abschlagmessers fluchten.

Die Backen sind in Längsrichtung vor und hinter der Sollschnittstelle des Rohres angeordnet. Die Längsrichtung ist definiert als die sich senkrecht zur Schnittebene erstreckende Richtung. Die Schnittebene ist die Ebene, in der sich die Schnittkanten des Abschlagmessers beim Schnittvorgang bewegen. Vorzugsweise bewegen sich auch die Schnittkanten der Anreißmesser beim Anreißen in dieser Ebene.

Die Begriffe "vordere" und "hintere" werden lediglich dazu verwendet, um die unterschiedliche gegenseitige Lage der Haltebacken bzgl. der axialen Richtung des Werkstücks anzugeben. Zwar sind die Begriffe in erster Linie in Bezug auf die hauptsächliche Transportrichtung des Werkstücks bezogen, müssen dies jedoch nicht sein, d.h. ein Austausch der Begriffe "vordere" und "hintere" ist dort jederzeit möglich, wo dem technisch nichts entgegen steht.

Wenigstens die erste Haltebacke und die zweite Haltebacke (sowohl vorne als auch hinten) können relativ zueinander bewegbar angeordnet sein.

In einer Ausführungsform der Erfindung können die Haltebacken parallel zu einer Trennebene und/oder quer zu einer Längsachse des Werkstücks relativ zueinander bewegbar angeordnet sein. Insbesondere können die Haltebacken sich (in Bezug auf die Längsachse des Rohres gesehen) seitlich relativ voneinander entfernen, um das Rohr bzw. die nach dem Trennvorgang vorhandenen Teilrohre freizugeben und weiter zu transportieren. Werden die Haltebacken aufeinander zu bewegt, treten die Kontaktflächen mit dem Rohr in Kontakt und pressen dieses von den Seiten her zusammen, sodass das Rohr sich verformt. Das verformte Rohr eignet sich aus verschiedenen Gründen besser für den Trennvorgang. Insbesondere greifen die Messer im Bereich großer Krümmung an. Große Krümmung bedeutet höhere Stabilität in diesen Bereichen, d.h. das eindringende Messer kann sauberer schneiden, da der Widerstand der Rohrwandung im Bereich des Eindringens größer ist, d.h. die Rohrwand weicht dem Messer beim Einschneiden in geringerem Maß aus.

Durch eine beispielsweise ovale Form der Kontaktflächen wird das dünnwandige Rohr in eine ovale Form verspannt, sodass es stabiler gegen Einwirkungen von außen ist. Die Backen sind vor und hinter dem Messer derart ausgebildet und angeordnet, so dass ein Ausreißen des Rohres nach außen verhindert wird. Es entsteht ein Abschereffekt, ähnlich wie beim Stanzen.

Die Schneideinrichtung kann wenigstens ein erstes Anreißmesser und ein Abschlagmesser aufweisen.

Vorzugsweise kann die Schneideinrichtung wenigstens ein zweites Anreißmesser aufweisen. Mit Hilfe dieses Messersystems, das im Rahmen der Erfindung eingesetzt wird, können die Anforderungen am besten erfüllt werden, insbesondere beim Durchtrennen dünnwandiger Rohre ohne Innenstützdorn.

Es werden vorzugsweise drei Messer eingesetzt, die nacheinander ins Rohr einstechen. Die ersten zwei Messer (Anreißmesser), öffnen das Rohr, sodass das dritte Messer (Abschlagmesser) das Rohr durchtrennen kann. Das durch den Schnitt des ersten Anreissmesser nach Innen geklappte Blech kann mit dem Schnitt des zweiten Anreissmesser wieder nach außen gedrückt werden, wodurch ein Ausweichen des Blechs nach Innen verhindert wird. Die Messer tauchen dabei mit hoher Geschwindigkeit in das Rohr ein, sodass sich das Rohr nicht während des Schnitts langsam verformen kann. Für die Bewegung der Messer kann ein Servoantrieb vorgesehen sein. Als Abfall entstehen relativ große Späne, die nach unten fallen und in einem Behälter gesammelt werden.

Die Messer sind insbesondere wenigstens in der Trennebene relativ zu den Haltebacken bewegbar angeordnet. Die Bewegung der Messer kann durch eine oder mehrere Führungseinrichtungen, beispielsweise Führungsschienen, geführt sein. Insbesondere führen das wenigstens eine Anreißmesser und/oder das Abschlagmesser beim Schneidvorgang eine Bewegung in einer definierten Ebene durch. Das wenigstens eine Anreißmesser und/oder das Abschlagmesser kann beim jeweiligen Schneidvorgang eine lineare Bewegung durchführen. Die Trennmesser sind insbesondere zwischen die vorderen und hinteren Haltebacken einfahrbar, d. h. zwischen den vorderen und hinteren Haltebacken ist ein Spalt zum Durchtritt des oder der Messer vorgesehen.

Die Halteeinrichtung weist vorzugsweise wenigstens einen Fixiereinsatz bzw. ein Fixierelement zur Fixierung des Werkstücks auf. Dadurch sollen ein Drehen des Rohres um die Längsachse des Rohres sowie eine Verschiebung entlang der Längsachse des Rohres während des Schneidvorgangs verhindert werden. Der Einsatz kann an der Innenseite wenigstens einer der Haltebacken angeordnet sein. Der Fixiereinsatz bzw. das Fixierelement ist vorzugsweise aus Kunststoff, beispielsweise einem Elastomer, hergestellt.

Ein erfindungsgemäßes Verfahren zum Durchtrennen eines rohrförmigen Werkstücks, insbesondere mittels einer Vorrichtung wie oben beschrieben, umfasst die Schritte: a) Einführen eines Rohrabschnitts zwischen Kontaktflächen einer Halteeinrichtung; und b) Bewegen der Kontaktflächen relativ zueinander quer zum Rohrabschnitt, sodass der Rohrabschnitt mit den Kontaktflächen in Kontakt tritt; wobei die Kontaktflächen eine konkave Innenkontur aufweisen, sodass sich der Rohrabschnitt zwischen den Kontaktflächen verformt.

Vorzugsweise ist die Innenkontur der Kontaktflächen im Querschnitt (d.h. quer oder senkrecht relativ zur Längsachse des Rohres) oval und/oder elliptisch ausgebildet.

Insbesondere weist das Verfahren einen weiteren Schritt c) des Durchtrennens des Rohres in einer Trennebene auf. Dabei wird das verformte Rohr durchtrennt, wobei die Messer in den Bereich größerer Krümmung eindringen, um einen saubereren Einschnitt zu ermöglichen.

Das Durchtrennen im Schritt c) kann durch ein Mehrfachmesser-Trennsystem, insbesondere ein Drei-Messer-System, erfolgen. Das System kann auch als Abschlagsystem bezeichnet werden.

Durch das Auseinanderfahren der Backen wird das durchtrennte Werkstück freigegeben. Die elastische Verspannung löst sich, das Werkstück entspannt im Bereich des vorher eingeklemmten Abschnitts und nimmt, auch im Bereich der Trennebene, seinen ursprünglichen Querschnitt an.

Mit Hilfe der Erfindung können insbesondere auch dünnwandige Rohre durchtrennt werden, z. B. Rohre mit Rohrdicken zwischen 0.075 mm und 0.3 mm bei Rohrdurchmessern von 10 mm bis 85 mm. Der Schnitt erfolgt im Wesentlichen spanfrei, d. h. beim Schnitt entstehen keine Späne oder Staub, die nicht wenigstens mit geringem Aufwand entfernt werden können. Die Erfindung erlaubt ein weitgehend spanloses Rohrtrennen. Außerdem werden Eindrücke und Einknickungen vermieden, die beim Schnitt hinderlich sind. Insbesondere sind Eindrücke und Einschnitte unerwünscht, die nicht beim Aufweiten auf einem Dorn ausgemerzt werden können. Zudem wird das Auftreten von Rissen im Rohr vermieden. Treten Risse auf, ist das Material zur Balgherstellung nicht mehr geeignet, da das Rohr bei einem weiteren Umformprozess aufreißt.

Bei Anwendung der Erfindung kann außerdem auf eine Innenführung verzichtet werden. Wird das Rohr beim Schneiden innen gestützt, so verlängern sich die Taktzeiten erheblich. Mit Hilfe der Erfindung können dagegen beispielsweise Taktzeiten von unter sechs Sekunden pro Schnitt erreicht werden.

### KURZE BESCHREIBUNG DER FIGUREN

Weitere Merkmale und Vorteile der Erfindung ergeben sich aus der Beschreibung bevorzugter Ausführungsbeispiele anhand der beigefügten Figuren. Es zeigen:
Figur 1 einen Querschnitt einer Ausführungsform einer erfindungsgemäßen Vorrichtung; und
Figur 2 einen Längsschnitt einer Ausführungsform der erfindungsgemäßen Vorrichtung.

### BESCHREIBUNG BEVORZUGTER AUSFÜHRUNGSBEISPIELE

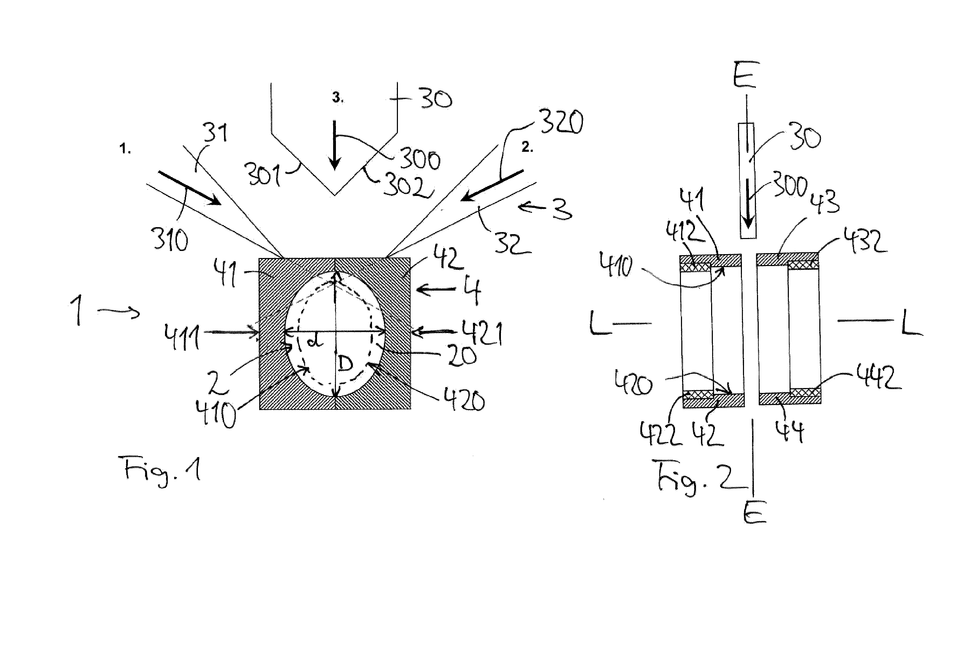

Die Figur 1 zeigt eine erfindungsgemäße Vorrichtung 1 zum Durchtrennen von Rohren 2, z.B. von Blechrohren in einem Querschnitt. Die Vorrichtung 1 ist insbesondere für das Durchtrennen in einem kontinuierlichen Fertigungsprozess geeignet.

Die Vorrichtung 1 umfasst ein Messersystem 3 mit einem ersten Anreißmesser 31, einem zweiten Anreißmesser 32 und einem Abschlagmesser 30. Die beiden Anreißmesser 31, 32 öffnen das Rohr 2 durch eine Bewegung in Richtung der Pfeile 310 bzw. 320. Das Abschlagmesser 30 durchtrennt anschließend das gesamte Rohr durch eine Bewegung in Richtung des Pfeils 300. Dabei durchschneiden die Schneidkanten 301 und 302 das Rohr vollständig. Die Messer 30, 31 und 32 führen beim Trennvorgang eine Bewegung in einer definierten Ebene, nämlich der Trennebene, durch.

Das Drei-Messer-System 30, 31, 32 hat den Vorteil, dass ein durch den ersten Schnitt des Anreissmessers 31, nach innen geklapptes Rohrwandstück mit dem zweiten Schnitt des Anreissmessers 32 wieder nach außen gedrückt wird. So kann verhindert werden, dass die Rohrwand 20 im Bereich der Schnittebene durch das Abschlagmesser 30 nach unten bzw. wenigstens teilweise nach innen (bezogen auf das Rohr) gedrückt wird. Die Messer 30, 31, 32 tauchen mit hoher Geschwindigkeit in das Rohr 2 ein, sodass sich das Rohr 2 nicht langsam verformen kann. Als Abfall entstehen große Späne, die nach unten fallen.

Außerdem weist die Vorrichtung 1 erfindungsgemäß eine Halteeinrichtung 4 zum Halten des Rohres 2 während des Schneidvorgangs auf. Die Halteeinrichtung 4 umfasst eine erste vordere Backe 41 und eine zweite vordere Backe 42. Die Backen 41 und 42 weisen Kontaktflächen 410 bzw. 420 auf, die während des Trennvorgangs mit einem Abschnitt der Rohrwand 20 wenigstens teilweise in Kontakt stehen. Die Kontaktflächen 410 bzw. 420 sind konkav und bilden jeweils einen konkaven Aufnahmeraum für das Rohr 2. Das Rohr 2 ist während des Trennvorgangs zwischen den Backen 41 und 42 eingeklemmt. Dazu werden die beiden Backen relativ zueinander in Richtung der Pfeile 411 bzw. 421 bewegt. Die konkaven Aufnahmeräume bilden zusammen einen Innenraum, durch den sich das Rohr 2 während des Trennvorgangs hindurch erstreckt. Der Querschnitt des Innenraums ist in diesem Ausführungsbeispiel oval bzw. elliptisch, d. h. die Kontaktflächen 410 und 420 begrenzen einen ovalen bzw. elliptischen Innenraum. Der Querschnitt weist einen kleinsten Durchmesser d und einen größten Durchmesser D auf.

Das Rohr 2 hat, bevor es zwischen die Backen 41 und 42 eingeklemmt wird, einen Durchmesser 2*r (r = Radius) mit d < 2*r < D. Das Rohr 2 wird durch Krafteinwirkung in Richtung 411, 421 verformt, sodass es im Bereich der Backen ebenfalls einen in etwa ovalen bzw. elliptischen Querschnitt einnimmt. Insbesondere legt sich die Außenwand des Rohres 2 an die Kontaktflächen 410 und 420 an. Die Backen 41 und 42 verspannen somit das dünnwandige Rohr 2 in wenigstens im Bereich der Trennebene in eine ovale bzw. elliptische Form, sodass das Rohr 2 stabiler gegen Einwirkungen von außen ist.

Die erste und zweite vordere Backen 41, 42 sind, bezogen auf die Trennebene E (vgl. Fig. 2), auf einer ersten Seite der Trennebene E angeordnet. Auf der anderen Seite der Trennebene E sind erste und zweite hintere Backen 43, 44 angeordnet, die vom Aufbau und Wirkungsweise den vorderen Backen 41 bzw. 42 entsprechen.

Die Backen 41, 42, 43 und 44 verhindern ein Ausreißen des Rohres 2 nach außen. Es entsteht ein Abschereffekt, ähnlich wie beim Stanzen.

Wie aus der Figur 2 deutlich wird, ist innerhalb der Backen 41 bis 44 jeweils ein Gummieinsatz 412, 422, 432 bzw. 442 angeordnet, der das Rohr, das zwischen den Backen 41 bis 44 und den Gummieinsätzen 412, 422, 432 und 442 eingeklemmt ist, während des Schneidvorgangs in Längsrichtung L des Rohres fixiert ist und ein Verdrehen des Rohrs verhindert wird

Das erfindungsgemäße Verfahren, durchgeführt mit der erfindungsgemäßen Vorrichtung 1, umfasst die Schritte: a) Einführen eines Rohrabschnitts zwischen die Kontaktflächen 410, 420 der Halteeinrichtung 4; b) Bewegen der Backen 41, 42, 43, 44 relativ zueinander quer zum Rohrabschnitt, sodass der Rohrabschnitt mit den Kontaktflächen 410 und 420 in Kontakt steht, wobei die Kontaktflächen 410 und 420 eine konkave Innenkontur 410 bzw. 420 aufweisen, sodass sich der Rohrabschnitt zwischen den Kontaktflächen 410 und 420 verformt. Der Rohrabschnitt passt sich damit an die vorgegebene Innenkontur 410, 420 der Backen 41, 42, 43, 44 an. Die Innenkontur ist im vorliegenden Ausführungsbeispiel in etwa oval bzw. elliptisch ausgebildet.

Anschließend erfolgt mit Schritt c) das Durchtrennen des Rohres 2 in einer Trennebene.

Das Durchtrennen im Schritt c) erfolgt durch ein Drei-Messer-System 3, das zwei Anreißmesser 31, 32 und ein Abschlagmesser 30 umfasst. Zunächst reißen die Anreißmesser 31, 32 nacheinander eine Öffnung in die Rohrwand 20, anschließend durchtrennt das Abschlagmesser 30 die Rohrwand 20 in der Trennebene E vollständig.

## Patentansprüche

1. Vorrichtung (1) zum Durchtrennen eines rohrförmigen Werkstücks (2), umfassend:
eine Schneideinrichtung (3); und
eine Halteeinrichtung (4) zum Halten wenigstens eines Abschnitts des Werkstücks (2) während des Trennvorgangs, wobei
die Halteeinrichtung (4) wenigstens eine erste vordere Haltebacke (41) und eine zweite vordere Haltebacke (42) aufweist, und die erste vordere Haltebacke (41) und/oder die zweite vordere Haltebacke (42) eine erste konkave Kontaktfläche (410) bzw. eine zweite konkave Kontaktfläche (420) zum Halten des Werkstücks (2) aufweisen,
**dadurch gekennzeichnet, dass**
die erste konkave Kontaktfläche (410) und/oder die zweite konkave Kontaktfläche (420) derart ausgebildet sind, dass das Rohr während des Trennvorgangs zwischen der ersten vorderen Haltebacke (41) und der zweiten vorderen Haltebacke (42) verspannt ist.

2. Vorrichtung (1) nach Anspruch 1,
**dadurch gekennzeichnet, dass**
die erste konkave Kontaktfläche (410) und/oder die zweite konkave Kontaktfläche (420) derart ausgebildet sind, dass das Werkstück während des Trennvorgangs im Bereich der Kontaktbacken (41, 42) deformiert wird.

3. Vorrichtung (1) nach Anspruch 1 oder 2,
**dadurch gekennzeichnet, dass**
die erste konkave Kontaktfläche (410) und/oder die zweite konkave Kontaktfläche (420) derart ausgebildet sind, dass das Werkstück während des Trennvorgangs wenigstens im Bereich der Kontaktbacken (41, 42) einen ovalen und/oder elliptischen Querschnitt annimmt.

4. Vorrichtung (1) nach Anspruch 1 oder 2,
**dadurch gekennzeichnet, dass**
die Kontaktflächen (410, 420) der Haltebacken (41, 42) einen Innenraum begrenzen, der wenigstens abschnittsweise einen ovalen und/oder elliptischen Querschnitt aufweist.

5. Vorrichtung (1) nach einem der vorhergehenden Ansprüche,
**dadurch gekennzeichnet, dass**
die Halteeinrichtung (4) eine erste hintere Haltebacke (43) und eine zweite hintere Haltebacke (44) aufweist, wobei die erste vordere Haltebacke (41) und die zweite vordere Haltebacke (42) auf einer ersten Seite der Trennebene angeordnet sind, und die erste hintere Haltebacke (43) und die zweite hintere Haltebacke (44) an einer der ersten Seite gegenüberliegenden zweiten Seite der Trennebene angeordnet sind.

6. Vorrichtung (1) nach einem der vorhergehenden Ansprüche,
**dadurch gekennzeichnet, dass**
wenigstens die erste Haltebacke (41) und die zweite Haltebacke (42) relativ zueinander bewegbar angeordnet sind.

7. Vorrichtung (1) nach einem der vorhergehenden Ansprüche,
**dadurch gekennzeichnet, dass**
die Haltebacken (41, 42) parallel zu einer Trennebene und/oder quer zu einer Längsachse des Werkstücks relativ zueinander bewegbar angeordnet sind.

8. Vorrichtung (1) nach einem der vorhergehenden Ansprüche,
**dadurch gekennzeichnet, dass**
die Schneideinrichtung (3) wenigstens ein erstes Anreißmesser (31) und ein Abschlagmesser (30) aufweist.

9. Vorrichtung (1) nach einem der vorhergehenden Ansprüche,
**dadurch gekennzeichnet, dass**
die Schneideinrichtung (3) wenigstens ein zweites Anreißmesser (31) aufweist.

10. Vorrichtung (1) nach einem der vorhergehenden Ansprüche 7 oder 8,
**dadurch gekennzeichnet, dass**
die Messer (30, 31, 32) wenigstens in der Trennebene relativ zu den Haltebacken (41, 42, 43, 44) bewegbar angeordnet sind.

11. Vorrichtung (1) nach einem der vorhergehenden Ansprüche 7 oder 8,
**dadurch gekennzeichnet, dass**
die Halteeinrichtung (4) wenigstens einen Fixiereinsatz (412, 422, 432, 442) zur Fixierung des Werkstücks (2) aufweist.

12. Verfahren zum Durchtrennen eines rohrförmigen Werkstücks (2), insbesondere mittels einer Vorrichtung (1) nach einem der Ansprüche 1 bis 10, umfassend die Schritte:
a) Einführen eines Rohrabschnitts zwischen Kontaktflächen (410, 420) einer Halteeinrichtung (4); und
b) Bewegen der Kontaktflächen (410, 420) relativ zueinander quer zum Rohrabschnitt, sodass der Rohrabschnitt mit den Kontaktflächen (410, 420) in Kontakt tritt; **dadurch gekennzeichnet, dass**
die Kontaktflächen (410, 420) eine konkave Innenkontur aufweisen, sodass sich der Rohrabschnitt zwischen den Kontaktflächen (410, 420) verformt.

13. Verfahren nach Anspruch 11,
**dadurch gekennzeichnet, dass**
Innenkontur der Kontaktflächen (410, 420) im Querschnitt oval und/oder elliptisch ausgebildet ist.

14. Verfahren nach Anspruch 11 oder 12,
**dadurch gekennzeichnet, dass**
das Verfahren einen weiteren Schritt c) des Durchtrennens des Rohres (2) in einer Trennebene (E) aufweist.

15. Verfahren nach Anspruch 13,
**dadurch gekennzeichnet, dass**
das Durchtrennen im Schritt c) durch ein Drei-Messer-System (3) erfolgt.
